(19)

**Europäisches Patentamt**
**European Patent Office**
**Office européen des brevets**

(11) **EP 4 394 692 B1**

(12) **EUROPEAN PATENT SPECIFICATION**

(45) Date of publication and mention
of the grant of the patent:
**29.04.2026 Bulletin 2026/18**

(21) Application number: **22874134.4**

(22) Date of filing: **16.03.2022**

(51) International Patent Classification (IPC):
**G06T 5/60** (2024.01)  **G06T 5/00** (2024.01)
**G06N 3/045** (2023.01)  **G06N 3/0464** (2023.01)
**G06N 3/08** (2023.01)

(52) Cooperative Patent Classification (CPC):
**G06N 3/08; G06N 3/045; G06N 3/0464; G06T 5/60;**
G06T 2207/20081; G06T 2207/20084

(86) International application number:
**PCT/CN2022/081106**

(87) International publication number:
**WO 2023/050731 (06.04.2023 Gazette 2023/14)**

(54) **METHOD FOR TRAINING IMAGE ENHANCEMENT MODEL, IMAGE ENHANCEMENT METHOD, AND READABLE MEDIUM**

VERFAHREN ZUM TRAINIEREN EINES BILDVERBESSERUNGSMODELLS, BILDVERBESSERUNGSVERFAHREN UND LESBARES MEDIUM

PROCÉDÉ D'ENTRAÎNEMENT D'UN MODÈLE D'AMÉLIORATION D'IMAGE, PROCÉDÉ D'AMÉLIORATION D'IMAGE ET SUPPORT LISIBLE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **28.09.2021 CN 202111143110**

(43) Date of publication of application:
**03.07.2024 Bulletin 2024/27**

(73) Proprietor: **Sanechips Technology Co., Ltd.**
**Shenzhen, Guangdong 518055 (CN)**

(72) Inventors:
- **REN, Cong**
  **Shenzhen, Guangdong 518057 (CN)**
- **LIU, Hengqi**
  **Shenzhen, Guangdong 518057 (CN)**
- **XU, Ke**
  **Shenzhen, Guangdong 518057 (CN)**
- **KONG, Dehui**
  **Shenzhen, Guangdong 518057 (CN)**
- **AI, Jisong**
  **Shenzhen, Guangdong 518057 (CN)**
- **LIU, Xin**
  **Shenzhen, Guangdong 518057 (CN)**
- **YOU, Jing**
  **Shenzhen, Guangdong 518057 (CN)**

(74) Representative: **Canzler & Bergmeier**
**Patentanwälte**
**Partnerschaft mbB**
**Despag-Straße 6**
**85055 Ingolstadt (DE)**

(56) References cited:
CN-A- 102 930 517     CN-A- 108 447 036
CN-A- 110 197 463     CN-A- 110 197 463
CN-A- 111 105 376     CN-A- 112 614 077
CN-A- 113 052 210     US-A1- 2020 219 238

- ZHU YURUI ET AL: "Learning Dual Transformation Networks for Image Contrast Enhancement", IEEE SIGNAL PROCESSING LETTERS, IEEE, USA, vol. 27, 5 November 2020 (2020-11-05), pages 1999 - 2003, XP011822862, ISSN: 1070-9908, [retrieved on 20201125], DOI: 10.1109/LSP.2020.3036312

EP 4 394 692 B1

**Description**

TECHNICAL FIELD

The present disclosure relates to, but is not limited to, the field of image processing technology.

BACKGROUND

Under the condition of low brightness at night and the like, a captured image is usually too low in brightness and is not clear enough. In particular, when a portable electronic device such as a mobile phone is used to capture images, due to the limitation of a size of the portable electronic device, an image capturing unit in the portable electronic device has poorer photosensitivity than a single-lens reflex camera, so that the above problem is more serious.

In view of this, for an image captured in a low-brightness environment, brightness and contrast of the image may be improved with image enhancement technology to make the image clearer, for example, night-scene image enhancement ("night-scene image enhancement" merely indicates that the image has low overall brightness but does not indicate that the image is captured at night) is performed. However, the existing image enhancement technology cannot produce an effect of effectively improving the brightness and the contrast of the image at the same time. Chinese patent application publication No. CN 111105376 A discloses a single-exposure high-dynamic-range image generation method based on a double-branch neural network. A single-frame LDR image captured in a real scene passes through the neural network with double branches, and then an HDR image with higher imaging quality in a high-exposure area and a low-exposure area is output. According to the method, the high-exposure area and the low-exposure area of the single-frame LDR image are processed through the two branches of the double-branch neural network model respectively, the finally obtained HDR image has more natural colors and richer details in high exposure, and noise in the low-exposure area can also be effectively suppressed.

SUMMARY

The present invention is set out in the appended claims.

**In** a first aspect, the present disclosure provides a method for training an image enhancement model, the image enhancement model includes an enhancement module configured to enhance brightness and contrast, and the enhancement module includes convolution branches in one-to-one correspondence with a plurality of preset brightness intervals; the enhancement module is configured to input pixels of an image input to the enhancement module to corresponding convolution branches according to brightness intervals to which the pixels belong, subject the pixels to convolution processing by a first convolution unit in each of the convolution branches, merge images output from the respective convolution branches, and subject to convolution processing by a second convolution unit; and the method includes: inputting a sample image to the image enhancement model, and acquiring a result image output by the image enhancement model; calculating losses including an image loss of the result image relative to a Ground Truth image, and a first constraint loss of brightness histogram constraint of each of the convolution branches of an image output from each of the convolution branches relative to the Ground Truth image; adjusting the enhancement module according to the losses; and in a case where a training end condition is not met, returning to the operation of inputting the sample image to the image enhancement model.

In a second aspect, the present disclosure provides an image enhancement method, including: inputting at least an image to be enhanced to an image enhancement model obtained through training with the method for training an image enhancement model described herein; and acquiring a result image output by the image enhancement model.

In a third aspect, the present disclosure provides a computer-readable medium having stored thereon a computer program which, when executed by a processor, implements: the method for training an image enhancement model described herein, and/or the image enhancement method described herein.

BRIEF DESCRIPTION OF DRAWINGS

FIG. 1 is a flowchart illustrating a method for training an image enhancement model according to the present disclosure;
FIG. 2 is a schematic diagram of processing flow of an image enhancement model according to the present disclosure;
FIG. 3 is a schematic diagram of input images of an alignment module of an image enhancement model according to the present disclosure;
FIG. 4 is another schematic diagram of input images of an alignment module of an image enhancement model according to the present disclosure;

FIG. 5 is a schematic diagram of processing flow of an Appearance-Preserving 3D Convolution (AP3D) alignment module of an image enhancement model according to the present disclosure;

FIG. 6 is a schematic diagram of processing flow of an Appearance-Preserving Module (APM) in an AP3D alignment module of an image enhancement model according to the present disclosure;

FIG. 7 is a schematic diagram of processing flow of a fusion module of an image enhancement model according to the present disclosure;

FIG. 8 is a schematic diagram of processing flow of an enhancement module of an image enhancement model according to the present disclosure;

FIG. 9 is a schematic diagram of processing flow of a residual down-sampling unit of an enhancement module of an image enhancement model according to the present disclosure;

FIG. 10 is a schematic diagram of processing flow of a residual up-sampling unit of an enhancement module of an image enhancement model according to the present disclosure;

FIG. 11 is a flowchart illustrating an image enhancement method according to the present disclosure; and

FIG. 12 is a block diagram of a computer-readable medium according to the present disclosure.

## DETAIL DESCRIPTION OF EMBODIMENTS

In order to enable those of ordinary skill in the art to better understand the technical solutions of the present disclosure, a method for training an image enhancement model, an image enhancement method, and a computer-readable medium provided by the present disclosure are described in detail below with reference to the drawings.

The present disclosure will be described more fully below with reference to the drawings, but the implementations illustrated may be embodied in different forms, and the present disclosure should not be interpreted as being limited to the implementations described below. Rather, the implementations are provided to make the present disclosure thorough and complete, and are intended to enable those of ordinary skill in the art to fully understand the scope of the present disclosure.

The drawings for the implementations of the present disclosure are intended to provide a further understanding of the implementations of the present disclosure and constitute a part of the specification. The drawings are used together with the specific implementations to explain the present disclosure, but do not constitute any limitation to the present disclosure. The above and other features and advantages will become more apparent to those of ordinary skill in the art from the description of the specific implementations with reference to the drawings.

The present disclosure can be described with reference to plans and/or cross-sectional views with the aid of idealized schematic diagrams of the present disclosure. Accordingly, the exemplary drawings may be modified according to manufacturing techniques and/or tolerances.

All the implementations of the present disclosure and the features therein may be combined with each other if no conflict is incurred.

The terms used herein are merely used to describe specific implementations, and are not intended to limit the present disclosure. The term "and/or" used herein includes one associated listed item or any and all combinations of more than one associated listed items. The terms "one" and "the" used herein which indicate a singular form are intended to include a plural form, unless expressly stated in the context. The terms "include" and "be made of" used herein indicate the presence of the described features, integers, operations, elements and/or components, but do not exclude the presence or addition of one or more other features, integers, operations, elements, components and/or combinations thereof.

Unless otherwise defined, all terms (including technical and scientific terms) used herein have the same meaning as commonly understood by those of ordinary skill in the art. It should be further understood that terms, such as those defined in commonly used dictionaries, should be interpreted as having a meaning that is consistent with a meaning in the context of the related technology and the background of the present disclosure, and should not be interpreted in an idealized or overly formal sense unless expressly so defined herein

The present disclosure are not limited to those illustrated by the drawings, but include modifications to configuration formed based on a manufacturing process. Thus, regions shown in the drawings are illustrative, and shapes of the regions shown in the drawings illustrate specific shapes of regions of elements, but are not intended to make limitations.

In some existing techniques, image enhancement may be performed using a "Super Night" technique.

With the Super Night technique, Convolutional Neural Networks (CNN) and the like are used as image enhancement models to process images, so as to simultaneously improve brightness and contrast of the images.

That is, the purpose of the Super Night technique is not to increase overall brightness of an image (to change a night scene to a daytime scene), but to increase brightness of a local area of the image which has higher brightness while substantially keeping brightness of a low-brightness area of the image unchanged, so as to make the brighter area in the image clearer and more visible (to brighten objects in the local area while keeping the night scene unchanged). For example, for a night-scene image captured at night, most areas of the image are the dark night sky and a few areas thereof are starlight, light and the like, the Super Night technique is desired to increase brightness of the areas where the starlight, the light and the like are located (locally brightening) under the condition that the night sky is kept relatively dark (maintaining the night scene).

However, in the existing technology, a method for training an image enhancement model is not reasonable and lacks appropriate brightness constraint, leading to the following results: an effect of image enhancement (such as the Super Night technique) performed by the model is not ideal; or an increase in overall brightness of an image obtained after the image enhancement is not enough, a brightening effect is not obvious, and the image is still not clear; or the image obtained after the image enhancement has an excessive increase in the overall brightness but has insufficient contrast, that is, the image is overall brightened instead of being locally brightened, for example, the night scene is changed into the daytime scene.

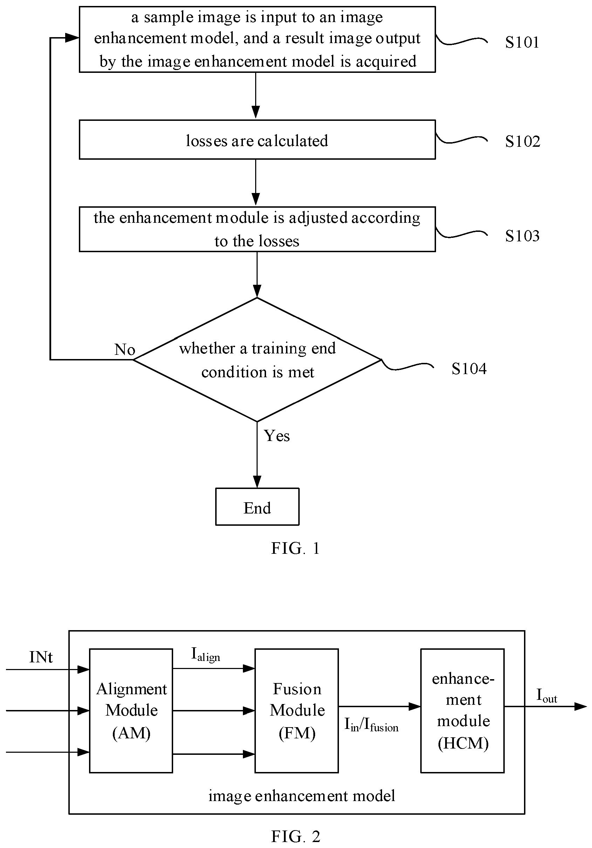

In a first aspect, referring to FIG. 1 to FIG. 10, the present disclosure provides a method for training an image enhancement model.

An image enhancement model in the present disclosure may be a Neural Network model, such as a model including a CNN.

The image enhancement model in the present disclosure may be configured to perform image enhancement (such as the night-scene image enhancement), and in particular, to improve brightness and contrast of an image at the same time. Thus, for an image with relatively low overall brightness (such as a night-scene image), the image enhancement model can increase brightness of a high-brightness area of the image while substantially keeping brightness of a low-brightness area of the image unchanged (brightening objects in a local area of the image while maintaining the night scene), so as to produce the image enhancement effect of the Super Night technique. Thus, the above image enhancement model can be also regarded as a "Super Night Network (SNN)".

The method in the present disclosure is used for training the image enhancement model, that is, adjusting parameters of the image enhancement model in a training process, so as to improve performance of the image enhancement model and finally obtain the image enhancement model as required.

In the present disclosure, the image enhancement model includes an enhancement module configured to enhance brightness and contrast, and the enhancement module includes convolution branches in one-to-one correspondence with a plurality of preset brightness intervals; and the enhancement module is configured to input pixels of an image input thereto to corresponding convolution branches according to brightness intervals to which the pixels belong, subject the pixels to convolution processing by a first convolution unit in each convolution branch, merge images output from the respective convolution branches, and subject to convolution processing by a second convolution unit.

Referring to FIG. 2, the image enhancement model in the present disclosure includes the enhancement module configured to enhance brightness and contrast, for example, the enhancement module is a Histogram Consistency Module (HCM).

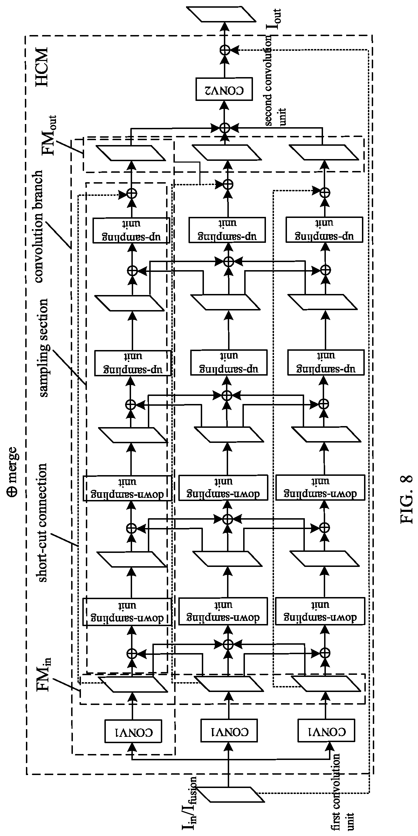

Referring to FIG. 2 and FIG. 8, after an image (e.g., an image $I_{fusion}$ output by a fusion module (FM) described below) is input to the enhancement module, and the pixels (features) in the image are input to the corresponding convolution branches according to the brightness intervals (i.e., ranges of brightness levels) in which the brightnesses of the pixels are located, so as to form multiple parallel data streams (an example of three parallel data streams is shown), that is, the data stream in each convolution branch merely includes the pixels (features) whose brightnesses are within a specific brightness interval. The data stream input to each convolution branch is subjected to convolution processing by the first convolution unit (CONV1) in the convolution branch to obtain an image ($FM_{in}$) for subsequent processing (such as being input to a sampling section); and the images output from the plurality of convolution branches are combined into an output image ($FM_{out}$) of the convolution branches, and then the output image is subjected to convolution processing in an "overall" second convolution unit (CONV2) and is output from the enhancement module as a result image ($I_{out}$).

Each of the second convolution unit and the first convolution units may include one or more convolution kernels, and the convolution kernels of the different convolution units may be different in number, size, weight, element, and the like.

In some implementations, the image enhancement model further includes an alignment module and a fusion module.

The alignment module is provided before the enhancement module, and is configured to align an image to be enhanced and an adjacent image which are input to the image enhancement model.

The adjacent image is an image which corresponds to the same scene as the image to be enhanced and is captured at an adjacent time relative to the image to be enhanced.

The fusion module is provided between the alignment module and the enhancement module, and is configured to fuse a plurality of aligned images output by the alignment module into one image and input the one image to the enhancement module.

Referring to FIG. 2, in an implementation of the present disclosure, the image enhancement model may further include the Alignment Module (AM) and the Fusion Module (FM), which are provided before the enhancement module. The Alignment Module is configured to align (e.g., pixel-align) a plurality of images input to the image enhancement model, and then the Fusion Module fuses the plurality of images into one image for subsequent processing by the enhancement module.

For an image captured under the condition of low brightness at night and the like, due to a relatively small amount of captured light, the image often has the problems of excessive noise, weak resolution, and low brightness. If the image is directly subjected to enhancement, the problem that the noise is mistakenly enhanced may be caused.

In view of this, multiple frames of images of the same scene may be continuously captured, one of the multiple frames of images is taken as the image to be enhanced, the other frames of images are taken as the adjacent images (each captured at an adjacent time) of the image to be enhanced, and the image to be enhanced and the adjacent images are all input to the alignment module and the fusion module to be aligned and fused, so that an image obtained by the fusion may have a combination of information of the multiple images, noise in the images can be reduced or eliminated, more details can be obtained, and higher resolution can be realized.

That is, the information of the multiple images (the multiple frames of images) can be comprehensively utilized through the alignment module and the fusion module, so that detailed information of the image input to the enhancement module (e.g. the HCM) can be enriched, so as to endow the finally obtained result image with greatly improved details and reduced noise.

Various methods for selecting the image to be enhanced and the adjacent images may be adopted, and the alignment module and the fusion module may be in various forms.

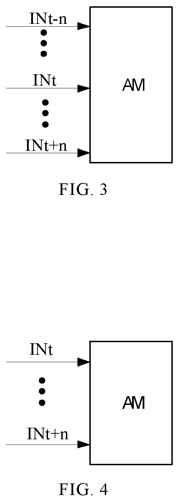

For example, referring to FIG. 3, for multiple consecutive frames of images INt-n ... INt ... INt+n in a video stream, the frame of image INt may be used as the image to be enhanced, and the n frames of images (n is an integer greater than or equal to 1) before and after the frame of image INt may be used as the adjacent images.

Certainly, image enhancement performed on the video stream may be performing image enhancement on each frame of the video stream, or processing each frame of the video stream with the method provided in the implantations of the present disclosure. Thus, an overall processing effect of the video stream is enhancing the video stream.

For example, referring to FIG. 4, for multiple consecutive frames of images INt ... INt+n, the frame of image INt may be used as the image to be enhanced, and the n frames of images after the frame of image INt may be used as the adjacent images.

That is, the image enhancement is not limited to merely one captured frame of image, multiple frames of images of the same scene may be continuously captured in a continuous shooting manner, so as to obtain richer content details.

For example, the Alignment Module (AM) may adopt AP3D, which can be used for reconstruction of images and can ensure appearance alignment of the reconstructed images.

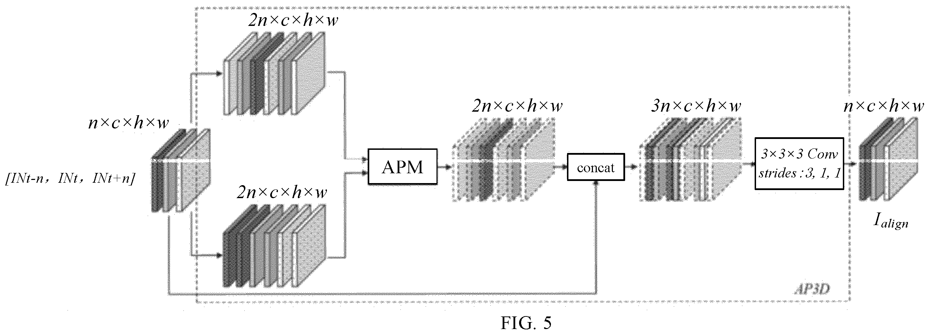

An AP3D structure is shown in FIG. 5, the image to be enhanced and the adjacent images are input to the AP3D structure with input dimensions of n×c×h×w, where n represents the number of images (the number of frames, n=3 is taken as an example in FIG. 5), c represents the number of channels (channels) of an image (the RAW format is taken as an example in FIG. 5, so c=1), and h and w represent a length and a width of an image respectively. For example, the input images are INt-1, INt, INt+1, INt is the image to be enhanced, and the other images are the adjacent images.

Referring to FIG. 5, the input images are copied and then divided into two paths, the three images in each path are copied again to obtain six images, and then the six images are reordered, such that each image is input as a main image to an Appearance-Preserving Module (APM) together with another image as a secondary image for pixel-level adjacent alignment, thus obtaining six images. The originally input three images are inserted (e.g., by concat) into the six images to obtain nine images, and the nine images are subjected to convolution processing (e.g., by Conv) having strides of 3, 1, 1 by 3*3*3 convolution kernels to obtain three images (i.e., aligned and reconstructed images) as an output ($I_{align}$) of the alignment module.

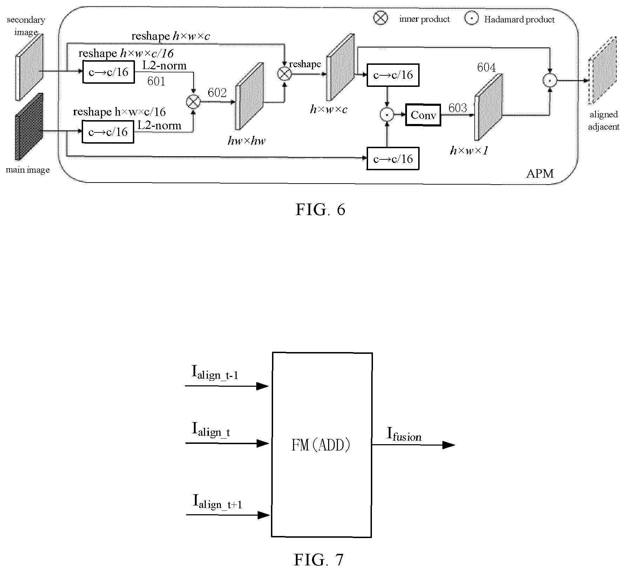

Exemplarily, a structure of the APM is shown in FIG. 6, a main image (i.e., a central image) and a secondary image (i.e., an adjacent image) which are input to the APM are subjected to a series of operations including reshape, L2-norm, Hadamard product and inner product, so that the two input images are adjacently aligned to form one image. Referring to FIG. 6, at 601, a tensor is transposed; at 602, a weight is calculated for an input feature tensor and is normalized to [0,1]; at 603, an input feature tensor is subjected non-linearization to be normalized to (0,1); and at 604, an output feature processed at 603 is named, such as being named *mask*.

Certainly, the Alignment Module (AM) may be any other module capable of performing the alignment function, such as another 3D convolutional network, an optical flow network, a deformable convolutional network, or a Motion Estimation and Motion Compensation (MEMC) network.

Referring to FIG. 7, the Fusion Module (FM) may directly fuse aligned images ($I_{align\_t-1}$, $I_{align\_t}$, $I_{align\_t+1}$) through feature (pixel) addition to obtain a fusion image ($I_{fusion}$) with dimensions of c×h×w. Referring to FIG. 2 and FIG. 8, the image ($I_{fusion}$) may be the image for being input to the enhancement module.

Certainly, the fusion module (FM) may be other modules capable of performing the fusion function, such as a cascade module, an addition module, and a convolutional neural network.

Referring to FIG. 1, the method of the present disclosure includes operations S101 to S104.

In operation S101, a sample image is input to an image enhancement model, and a result image output by the image enhancement model is acquired.

In the present disclosure, the sample image is input to a current image enhancement model and is processed (image enhancement) by the image enhancement model to obtain the result image ($I_{out}$).

The sample image is in preset training samples, each training sample includes a sample image and a corresponding standard image (Ground Truth image, $I_{GT}$), the sample image is equivalent to the image to be enhanced, and the Ground Truth image is an image obtained after the sample image is subjected to image enhancement with a good effect.

Various methods for obtaining the corresponding sample image and the Ground Truth image may be adopted. For example, an image acquisition unit (such as a camera) may be used to continuously perform, for a same scene, image acquisition with a short exposure time and image acquisition with a long exposure time, and a pair of a long exposure image and a short exposure image such obtained are used as the training samples. The long exposure image with a long exposure time has a relatively large amount of captured light, and is equivalent to an image obtained after the short exposure image is subjected to image enhancement, so that the short exposure image may be used as the sample image, and the long exposure image may be used as the Ground Truth image.

In operation S102, losses are calculated.

The losses include an image loss of the result image relative to the Ground Truth image, and a first constraint loss of brightness histogram constraint of each convolution branch of an image output from a convolution branch relative to the Ground Truth image.

After the result image is obtained, the corresponding losses may be calculated by loss functions, and the losses may represent a difference between the result image obtained by the current image enhancement model and an expected standard result.

In the implementations of the present disclosure, the losses at least include the image loss and the first constraint loss.

The image loss represents a difference between the current result image (i.e., the image $I_{out}$ output by the enhancement module) and the corresponding Ground Truth Image ($I_{GT}$).

The first constraint loss represents a difference of the image output from the convolution branch (i.e., the image FMout which is output from the convolution branch and needs to be subjected to convolution processing by the second convolution unit) relative to the Ground Truth image ($I_{GT}$) in distribution of the number of pixels (features) in each brightness interval counted according to a histogram (that is, a difference in brightness histogram discrete distribution between the two images). Thus, the first constraint loss is equivalent to introducing brightness histogram constraint (regular constraint) into a training process.

In operation S103, the enhancement module is adjusted according to the losses.

According to the losses, with the aim of reducing the losses, parameters (such as weights and values of elements of the convolution kernels) of the enhancement module are adjusted accordingly, so as to improve the image enhancement model.

Certainly, if the image enhancement model further includes other modules (such as the alignment module and the fusion module described above), those modules may be set in advance (such as using existing mature modules, or being separately trained in advance), so that parameters of those modules may not be adjusted during the training process, that is, those modules are not trained during the training process.

Certainly, it is also feasible if the parameters of those modules need to be adjusted according to the losses, that is, those modules are trained.

Various methods for adjusting the parameters according to the losses may be adopted, and will not be described in detail here.

In operation S104, if a training end condition is not met, the process is returned to the operation of inputting the sample image to the image enhanced model.

It is determined whether a preset training end condition is met currently.

If it is determined that the preset training end condition is not met currently, the process is returned to the operation of inputting the sample image to the image enhancement model (S101), and a sample image is reselected to continue to the training of the image enhancement model, so as to further optimize the image enhancement model.

If it is determined that the preset training end condition is met currently, the process is ended, the training of the image enhancement model is completed, and the image enhancement model can be subsequently used for image enhancement.

The training end condition may be in various forms, for example, the training end condition may be that the losses reach preset ranges, or convergence of the image enhancement model reaches a certain degree, or a preset number of cycles is reached, which will not be described in detail here.

In some implementations, each convolution branch further includes: a sampling section provided after the first convolution unit, and the sampling section includes a plurality of sampling units configured to perform sampling; and inputs to each sampling unit are from the convolution branch where the sampling unit is located and at least one of the other convolution branches.

For better interaction of information of the data streams in the different convolution branches, referring to FIG. 8, the sampling section may be provided after the first convolution unit of each convolution branch, the sampling section includes the sampling units, and the inputs to each sampling unit are not only from a preceding unit (such as a first sampling unit or another sampling unit) of the same convolution branch, but also from a corresponding preceding unit of another convolution branch (i.e., a preceding unit located in another convolution branch at an equivalent position as the preceding unit of the current convolution branch), and the multiple inputs are added and then input to a following unit. In other words, an output from the first sampling unit or each sampling unit is input not only to a following sampling unit of the convolution branch where the first sampling unit or each sampling unit is located, but also to a corresponding following sampling unit of another convolution branch.

For example, referring to FIG. 8, in the three convolution branches, each sampling unit of the sampling section in the middle convolution branch receives outputs from corresponding preceding units of the other two convolution branches in addition to receiving an output from a preceding unit of the middle convolution branch, combines the outputs, and then input the same to a following unit; and each sampling unit of the other two convolution branches receives an output from a corresponding preceding unit of the middle convolution branch in addition to receiving an output from a preceding unit of the convolution branch where the sampling unit is located. Due to a large difference in pixel brightness between the upper convolution branch and the lower convolution branch, outputs from the upper convolution branch and the lower convolution branch are not input to each other.

In some implementations, the sampling section includes a down-sampling unit configured to perform down-sampling, and an up-sampling unit disposed after the down-sampling unit and configured to perform up-sampling.

In some implementations, the down-sampling unit is configured to perform residual down-sampling; and the up-sampling unit is configured to perform residual up-sampling.

In an implementation of the present disclosure, in order to ensure an unchanged size of the image (i.e., the image output to the second convolution unit) finally output from each convolution branch, the down-sampling unit may be provided before the up-sampling unit in the sampling section. For example, the sampling section may include down-sampling units and an equal number of up-sampling units, for example, referring to FIG. 8, two down-sampling units are provided before two up-sampling units.

Furthermore, the down-sampling unit may be a residual down-sampling unit (Resblock_down) configured to perform residual down-sampling, and the up-sampling unit may be a residual up-sampling unit (Resblock_up) configured to perform residual up-sampling.

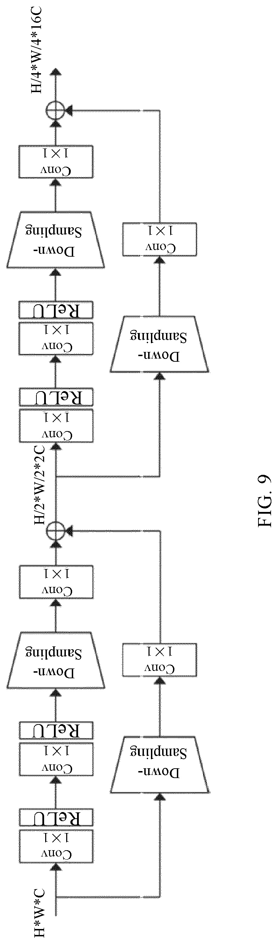

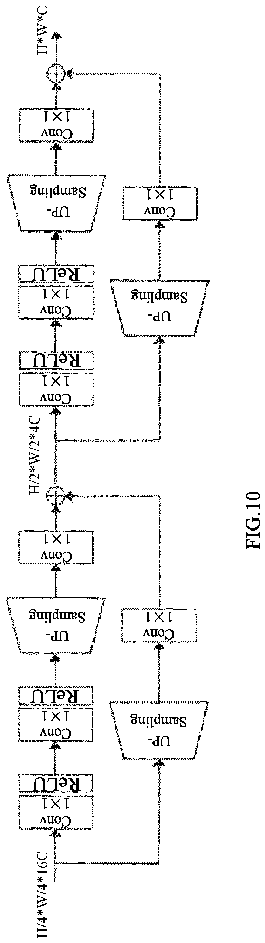

Illustratively, a structure of the residual down-sampling unit and a structure of the residual up-sampling unit are shown in FIG. 9 and FIG. 10 respectively, and each structure includes a plurality of convolution operations (Conv) of different sizes, a linear rectification function (ReLU) for activation, and a down-sampling operation or an up-sampling operation.

Certainly, forms of the sampling units and the residual sampling units are not limited to the above, and any other sampling unit, even a convolution sampling unit without changing a size, may be adopted.

In some implementations, each convolution branch further includes: a short-cut connection between an input terminal of the sampling section and an output terminal thereof, and the short-cut connection is configured to input an image input to the sampling section to the output terminal of the sampling section in a short-cut manner.

Referring to a dotted arrow in FIG. 8, the convolution branches further include a short-cut connection between an input terminal of the convolution branches and an output terminal thereof, that is, the image input to the convolution branches is also input to the output terminal thereof for addition, so as to further improve an effect of improving contrast.

Certainly, the enhancement module may further include other short-cut connections, such as a short-cut connection for directly inputting the image input to the enhancement module (i.e., the image $I_{fusion}$ output by the fusion module) to an output terminal (i.e., after the second convolution unit) of the enhancement module, that is, combining the image ($I_{fusion}$) input to the enhancement unit with an image (i.e., the image output by the second convolution unit) expected (when the short-cut connection is not provided) to be output by the enhancement module.

It should be understood that the above short-cut connections also span multiple stages, and are thus also residual connections in nature.

In some implementations, the losses further include: a second constraint loss of brightness histogram constraint of each convolution branch of an image input to a sampling section relative to the image input to the enhancement module.

As stated above, the first constraint loss represents the difference of the image (FMout ) output from the convolution branch relative to the Ground Truth image ($I_{GT}$) in distribution of the number of pixels in each brightness interval counted according to the histogram, that is, a difference existing at an "output side" of the enhancement module. Meanwhile, a difference may also exist at an "input side" of the enhancement module and may also affect the losses.

Thus, the losses may further include the second loss, i.e., the difference of the image input to the sampling section (the image $FM_{in}$ obtained by processing by the first convolution unit) relative to the image ($I_{in}$, e.g., the image output by the fusion module) input to the enhancement module in distribution of the number of pixels in each brightness level counted according to a histogram.

In some implementations, the losses are calculated by the following formulae:

$$loss = \left\| I_{out} - I_{GT} \right\|_1 + \lambda_1 Hist\left(FM_{out}, I_{GT}, S\right) + \lambda_2 Hist\left(FM_{in}, I_{in}, S\right);$$

$$Hist\left(FM_{out}, I_{GT}, S\right) = \frac{\sum_{j=1}^{S}\left(\left| hist\left(FM_{out}\right)_j - hist\left(I_{GT}\right)_j \right|\right)}{hist\left(I_{GT}\right)};$$

$$Hist\left(FM_{in}, I_{in}, S\right) = \frac{\sum_{i=1}^{S}\left(\left| hist\left(FM_{in}\right)_i - hist\left(I_{in}\right)_i \right|\right)}{hist\left(I_{in}\right)}.$$

Where $Hist(FM_{out}, I_{GT}, S)$ represents the first constraint loss, $Hist(FM_{in}, I_{in}, S)$ represents the second constraint loss, $I_{in}$ represents the image input to the enhancement module, $I_{out}$ represents the result image, $I_{GT}$ represents the Ground Truth image, $FM_{in}$ represents the image input to the sampling section, $FM_{out}$ represents the image output by the convolution branch, S represents the number of the brightness intervals, $\| \ \|_1$ represents an L1 norm function, hist represents a HIST statistical function, $\lambda_1$ represents a preset coefficient (e.g., 0.2) greater than 0, and $\lambda_2$ represents a preset coefficient (e.g., 0.2) greater than 0.

In the above formulae, "FM" in $FM_{in}$ and $FM_{out}$ stands for "Feature Map", and has nothing to do with the Fusion Module (FM).

In an implementation of the present disclosure, the losses may be calculated by the above formulae, where $\|I_{out} - I_{GT}\|_1$ represents the image loss, and $Hist(FM_{out}, I_{GT}, S)$ and $Hist(FM_{in}, I_{in}, S)$ represent the first constraint loss and the second constraint loss, respectively.

Specifically, hist represents the HIST statistical function which is used to count the number of different features (pixels with different brightnesses) in an object (image). For example, $Hist(FM_{out}, I_{GT}, S)$ represents the sum of ratios of respective differences between the numbers of pixels in S brightness levels of the Ground Truth image ($I_{GT}$) and the numbers of pixels in S brightness levels of the image ($FM_{out}$) output by the convolution branch to the total number of pixels.

Certainly, it is also feasible to adopt other methods for calculating the constraint losses generated based on the histograms.

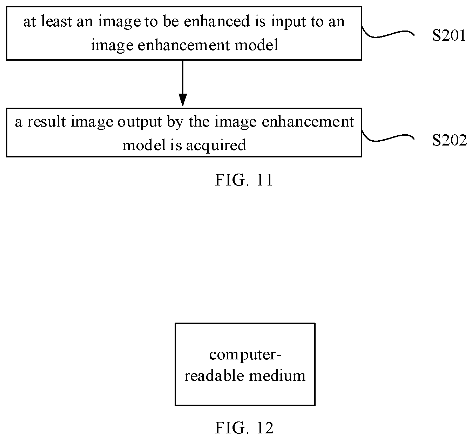

In a second aspect, referring to FIG. 11, the present disclosure provides an image enhancement method (e.g., a night-scene image enhancement method), which may include operations S201 and S202.

In operation S201, at least an image to be enhanced is input to an image enhancement model.

The image enhancement model is obtained through training with the method for training an image enhancement model provided in any one of the implementations of the present disclosure.

In operation S202, a result image output by the image enhancement model is acquired.

After the image enhancement model is obtained through the training with the above method including the brightness histogram constraint, the image enhancement model can be used for image enhancement (the Super Night technique).

That is, the image to be enhanced is input to the image enhancement model (certainly, one or more adjacent images may also be input), and is sequentially processed with an alignment module, a fusion module, and an enhancement module of the image enhancement model, so as to obtain the enhanced result image.

In a third aspect, referring to FIG. 12, the present disclosure provides a computer-readable medium having stored thereon a computer program which, when executed by a processor, implements the method for training an image enhancement model provided in any one of the implementations of the present disclosure, and/or the image enhancement method provided in any one of the implementations of the present disclosure.

The processor is a device having data processing capability, and includes, but is not limited to, a Central Processing Unit (CPU); the computer-readable medium is a device having data storage capability, and includes, but is not limited to, a Random Access Memory (RAM, more specifically, a Synchronous Dynamic RAM (SDRAM), a Double Data Rate SDRAM (DDR SDRAM), etc.), a Read-Only Memory (ROM), an Electrically Erasable Programmable Read-Only Memory (EEPROM), and a flash memory (FLASH); and an I/O interface (read/write interface) is connected between the processor and a memory, can enable information interaction between the memory and the processor, and includes, but is not limited to, a data bus (Bus).

In the present disclosure, the brightness histogram constraint (belonging to the regular constraint) is introduced in the training process of the image enhancement model, so that the obtained image enhancement model can effectively perform brightness enhancement in different ways according to brightnesses of different areas, that is, effectively improving the brightness of a high-brightness area while substantially keeping the brightness of a low-brightness area unchanged, thereby improving brightness and contrast at the same time, meeting the requirement (brightening objects in a local area of a night-scene image while maintaining the night scene) of image enhancement (such as the night-scene image enhancement) such as the Super Night technique, and producing a better image enhancement effect.

It should be understood by those of ordinary skill in the art that the functional modules/units in all or some of the operations, the systems and the devices disclosed above may be implemented as software, firmware, hardware, or suitable combinations there of.

If implemented as hardware, the division between the functional modules/units stated above is not necessarily corresponding to the division of physical components; and for example, one physical component may have a plurality of functions, or one function or operation may be performed through cooperation of several physical components.

Some or all of the physical components may be implemented as software executed by a processor, such as a CPU, a digital signal processor or a microprocessor, or may be implemented as hardware, or may be implemented as an integrated circuit, such as an application specific integrated circuit. Such software may be distributed on a computer-readable medium, which may include a computer storage medium (or a non-transitory medium) and a communication medium (or a transitory medium). As well known by those of ordinary skill in the art, the term "computer storage medium" includes volatile/nonvolatile and removable/non-removable media used in any method or technology for storing information (such as computer-readable instructions, data structures, program modules and other data). The computer storage medium includes, but is not limited to, an RAM (more specifically, an SDRAM, a DDR SDRAM, etc.), an ROM, an EEPROM, a FLASH or other magnetic storage devices; a Compact Disc Read Only Memory (CD-ROM), a Digital Versatile Disc (DVD) or other optical discs; a magnetic cassette, a magnetic tape, a magnetic disk or other magnetic storage devices; and any other medium which can be configured to store desired information and can be accessed by a computer. In addition, it is well known by those of ordinary skill in the art that the communication media generally include computer-readable instructions, data structures, program modules, or other data in modulated data signals such as carrier wave or other transmission mechanism, and may include any information delivery medium.

The present disclosure discloses the exemplary implementations using specific terms, but the terms are merely used and should be merely interpreted as having general illustrative meanings, rather than for the purpose of limitation. Unless expressly stated, it is apparent to those of ordinary skill in the art that features, characteristics and/or elements described in connection with a particular implementation can be used alone or in combination with features, characteristics and/or elements described in connection with other implementations. Therefore, it should be understood by those of ordinary skill in the art that various changes in the forms and the details can be made without departing from the scope of the present disclosure of the appended claims.

## Claims

1. A computer-implemented method for training an image enhancement model, wherein the image enhancement model comprises an enhancement module configured to enhance brightness and contrast, and the enhancement module comprises convolution branches in one-to-one correspondence with a plurality of preset brightness intervals; the enhancement module is configured to input pixels of an image input to the enhancement module to corresponding convolution branches according to brightness intervals to which the pixels belong, subject the pixels to convolution processing by a first convolution unit in each of the convolution branches, merge images output from the respective convolution branches, and subject to convolution processing by a second convolution unit; and the method comprises:

   inputting (S101) a sample image to the image enhancement model, and acquiring (S101) a result image output by the image enhancement model;
   calculating (S102) losses comprising an image loss of the result image relative to a Ground Truth image, and a first constraint loss of brightness histogram constraint of each of the convolution branches of an image output from each of the convolution branches relative to the Ground Truth image;
   adjusting (S103) the enhancement module according to the losses; and
   in a case where a training end condition is not met, returning to the operation of inputting (S101) the sample image to the image enhancement model.

2. The method of claim 1, wherein each of the convolution branches further comprises:

   a sampling section provided after the first convolution unit and comprising a plurality of sampling units configured to perform sampling; and

inputs to each sampling unit are from a convolution branch where the sampling unit is located and at least one of other convolution branches.

3. The method of claim 2, wherein the losses further comprise:
a second constraint loss of brightness histogram constraint of each of the convolution branches of an image input to the sampling section relative to the image input to the enhancement module.

4. The method of claim 3, wherein the losses are calculated by the following formulae:

$$loss = \left\| I_{out} - I_{GT} \right\|_1 + \lambda_1 Hist\left(FM_{out}, I_{GT}, S\right) + \lambda_2 Hist\left(FM_{in}, I_{in}, S\right);$$

$$Hist\left(FM_{out}, I_{GT}, S\right) = \frac{\sum_{j=1}^{S}\left(\left|hist\left(FM_{out}\right)_j - hist\left(I_{GT}\right)_j\right|\right)}{hist\left(I_{GT}\right)};$$

$$Hist\left(FM_{in}, I_{in}, S\right) = \frac{\sum_{i=1}^{S}\left(\left|hist\left(FM_{in}\right)_i - hist\left(I_{in}\right)_i\right|\right)}{hist\left(I_{in}\right)};$$

where $Hist(FM_{out}, I_{GT}, S)$ represents the first constraint loss, $Hist(FM_{in}, I_{in}, S)$ represents the second constraint loss, $I_{in}$ represents the image input to the enhancement module, $I_{out}$ represents the result image, $I_{GT}$ represents the Ground Truth image, $FM_{in}$ represents the image input to the sampling section, $FM_{out}$ represents the image output from each of the convolution branches, S represents a number of the brightness intervals, $\|\ \|_1$ represents an L1 norm function, hist represents a HIST statistical function, $\lambda_1$ represents a preset coefficient greater than 0, and $\lambda_2$ represents a preset coefficient greater than 0.

5. The method of claim 2, wherein
the sampling section comprises a down-sampling unit configured to perform down-sampling, and an up-sampling unit provided after the down-sampling unit and configured to perform up-sampling.

6. The method of claim 5, wherein

the down-sampling unit is configured to perform residual down-sampling; and
the up-sampling unit is configured to perform residual up-sampling.

7. The method of claim 2, wherein each of the convolution branches further comprises: a short-cut connection between an input terminal of the sampling section and an output terminal of the sampling section, and the short-cut connection is configured to input an image input to the sampling section to the output terminal of the sampling section.

8. The method of claim 1, wherein the image enhancement model further comprises:

an alignment module provided before the enhancement module, and configured to align an image to be enhanced and an adjacent image which are input to the image enhancement model, with the adjacent image being an image which is corresponding to a same scene as the image to be enhanced and is captured at an adjacent time relative to the image to be enhanced; and
a fusion module provided between the alignment module and the enhancement module, and configured to fuse a plurality of aligned images output by the alignment module into one image and input the one image to the enhancement module.

9. An image enhancement method, comprising:

inputting (S201) at least an image to be enhanced to an image enhancement model obtained through training with the method for training an image enhancement model of any one of claims 1 to 8; and
acquiring (S202) a result image output by the image enhancement model.

10. A computer-readable medium having stored thereon a computer program which, when executed by a processor, causes the processor to perform the method for training an image enhancement model of any one of claims 1 to 8.

11. A computer program comprising instructions which, when executed by a processor, cause the processor to perform the image enhancement method of claim 9.

**Patentansprüche**

1. Computerimplementiertes Verfahren zum Trainieren eines Bildverbesserungsmodells, wobei das Bildverbesserungsmodell ein Verbesserungsmodul umfasst, das konfiguriert ist, um Helligkeit und Kontrast zu verbessern, und das Verbesserungsmodul Faltungszweige in Eins-zu-Eins-Zuordnung zu einer Vielzahl von voreingestellten Helligkeitsintervallen umfasst; wobei das Verbesserungsmodul konfiguriert ist, um Pixel eines Bildes, das in das Verbesserungsmodul eingegeben wird, in entsprechende Faltungszweige gemäß Helligkeitsintervallen einzugeben, zu denen die Pixel gehören, die Pixel einer Faltungsverarbeitung durch eine erste Faltungseinheit in jedem der Faltungszweige zu unterziehen, Bilder, die von den jeweiligen Faltungszweigen ausgegeben werden, zusammenzuführen und einer Faltungsverarbeitung durch eine zweite Faltungseinheit zu unterziehen; und das Verfahren umfasst:

   Eingeben (S101) eines Beispielbildes in das Bildverbesserungsmodell und Erfassen (S101) eines Ergebnisbildes, das durch das Bildverbesserungsmodell ausgegeben wird;
   Berechnen (S102) von Verlusten, die einen Bildverlust des Ergebnisbildes in Bezug auf ein Ground-Truth-Bild und einen ersten Einschränkungsverlust einer Helligkeitshistogrammeinschränkung jedes der Faltungszweige eines Bildes, das von jedem der Faltungszweige in Bezug auf das Ground-Truth-Bild ausgegeben wird, umfassen;
   Anpassen (S103) des Verbesserungsmoduls gemäß den Verlusten; und
   in einem Fall, in dem eine Trainingsendbedingung nicht erfüllt ist, Zurückkehren zu dem Vorgang des Eingebens (S101) des Beispielbildes in das Bildverbesserungsmodell.

2. Verfahren nach Anspruch 1, wobei jeder der Faltungszweige ferner umfasst:

   einen Abtastabschnitt, der nach der ersten Faltungseinheit bereitgestellt wird und eine Vielzahl von Abtasteinheiten umfasst, die konfiguriert sind, um ein Abtasten durchzuführen; und
   wobei Eingaben in jede Abtasteinheit von einem Faltungszweig, in dem sich die Abtasteinheit befindet, und mindestens einem von anderen Faltungszweigen stammen.

3. Verfahren nach Anspruch 2, wobei die Verluste ferner umfassen:
   einen zweiten Einschränkungsverlust einer Helligkeitshistogrammeinschränkung jedes der Faltungszweige eines Bildes, das in den Abtastabschnitt eingegeben wird, in Bezug auf das Bild, das in das Verbesserungsmodul eingegeben wird.

4. Verfahren nach Anspruch 3, wobei die Verluste durch die folgenden Formeln berechnet werden:

$$loss = \left\| I_{out} - I_{GT} \right\|_1 + \lambda_1 Hist\left( FM_{out}, I_{GT}, S \right) + \lambda_2 Hist\left( FM_{in}, I_{in}, S \right);$$

$$Hist\left( FM_{out}, I_{GT}, S \right) = \frac{\sum_{j=1}^{S} \left( \left| hist\left( FM_{out} \right)_j - hist\left( I_{GT} \right)_j \right| \right)}{hist\left( I_{GT} \right)};$$

$$Hist\left(FM_{in},I_{in},S\right)=\frac{\sum_{i=1}^{S}\left(\left|hist\left(FM_{in}\right)_{i}-hist\left(I_{in}\right)_{i}\right|\right)}{hist\left(I_{in}\right)};$$

wobei *Hist*($FM_{out}$,$I_{GT}$,S) den ersten Einschränkungsverlust repräsentiert, *Hist*($FM_{in}$,$I_{in}$,S) den zweiten Einschränkungsverlust repräsentiert, $I_{in}$ das Bild repräsentiert, das in das Verbesserungsmodul eingegeben wird, $I_{out}$ das Ergebnisbild repräsentiert, $I_{GT}$ das Ground-Truth-Bild repräsentiert, $FM_{in}$ das Bild repräsentiert, das in den Abtastabschnitt eingegeben wird, $FM_{out}$ das Bild repräsentiert, das von jedem der Faltungszweige ausgegeben wird, S eine Anzahl der Helligkeitsintervalle repräsentiert, $\| \|_1$ eine L1-Normfunktion repräsentiert, hist eine statistische HIST-Funktion repräsentiert, $\lambda_1$ einen voreingestellten Koeffizienten größer als 0 repräsentiert und $\lambda_2$ einen voreingestellten Koeffizienten größer als 0 repräsentiert.

5. Verfahren nach Anspruch 2, wobei
der Abtastabschnitt eine Abwärtsabtasteinheit, die konfiguriert ist, um ein Abwärtsabtasten durchzuführen, und eine Aufwärtsabtasteinheit umfasst, die nach der Abwärtsabtasteinheit bereitgestellt wird und konfiguriert ist, um ein Aufwärtsabtasten durchzuführen.

6. Verfahren nach Anspruch 5, wobei

die Abwärtsabtasteinheit konfiguriert ist, um ein Restabwärtsabtasten durchzuführen; und
die Aufwärtsabtasteinheit konfiguriert ist, um ein Restaufwärtsabtasten durchzuführen.

7. Verfahren nach Anspruch 2, wobei jeder der Faltungszweige ferner umfasst: eine Kurzschlussverbindung zwischen einem Eingabeanschluss des Abtastabschnitts und einem Ausgabeanschluss des Abtastabschnitts, und die Kurzschlussverbindung konfiguriert ist, um ein Bild, das in den Abtastabschnitt eingegeben wird, in den Ausgabeanschluss des Abtastabschnitts einzugeben.

8. Verfahren nach Anspruch 1, wobei das Bildverbesserungsmodell ferner umfasst:

ein Ausrichtungsmodul, das vor dem Verbesserungsmodul bereitgestellt wird und konfiguriert ist, um ein zu verbesserndes Bild und ein benachbartes Bild, die in das Bildverbesserungsmodell eingegeben werden, auszurichten, wobei das benachbarte Bild ein Bild ist, das einer gleichen Szene wie das zu verbessernde Bild entspricht und zu einer benachbarten Zeit in Bezug auf das zu verbessernde Bild aufgenommen wird; und
ein Zusammenführungsmodul, das zwischen dem Ausrichtungsmodul und dem Verbesserungsmodul bereitgestellt wird und konfiguriert ist, um eine Vielzahl von ausgerichteten Bildern, die durch das Ausrichtungsmodul ausgegeben werden, zu einem Bild zusammenzuführen und das eine Bild in das Verbesserungsmodul einzugeben.

9. Bildverbesserungsverfahren, umfassend:

Eingeben (S201) mindestens eines zu verbessernden Bildes in ein Bildverbesserungsmodell, das durch Trainieren mit dem Verfahren zum Trainieren eines Bildverbesserungsmodells nach einem der Ansprüche 1 bis 8 erhalten wird; und
Erfassen (S202) eines Ergebnisbildes, das durch das Bildverbesserungsmodell ausgegeben wird.

10. Computerlesbares Medium, auf dem ein Computerprogramm gespeichert ist, das, wenn es durch einen Prozessor ausgeführt wird, den Prozessor veranlasst, das Verfahren zum Trainieren eines Bildverbesserungsmodells nach einem der Ansprüche 1 bis 8 durchzuführen.

11. Computerprogramm, umfassend Anweisungen, die, wenn sie durch einen Prozessor ausgeführt werden, den Prozessor veranlassen, das Bildverbesserungsverfahren nach Anspruch 9 durchzuführen.

**Revendications**

1. Procédé mis en œuvre par ordinateur pour entraîner un modèle d'amélioration d'image, dans lequel le modèle d'amélioration d'image comprend un module d'amélioration configuré pour améliorer la luminosité et le contraste, et le module d'amélioration comprend des branches de convolution en correspondance biunivoque avec une pluralité d'intervalles de luminosité prédéfinis ; dans lequel le module d'amélioration est configuré pour entrer des pixels d'une image entrée dans le module d'amélioration dans des branches de convolution correspondantes en fonction d'intervalles de luminosité auxquels appartiennent les pixels, soumettre les pixels à un traitement de convolution par une première unité de convolution dans chacune des branches de convolution, fusionner des images délivrées en sortie à partir des branches de convolution respectives, et soumettre à un traitement de convolution par une seconde unité de convolution ; et le procédé comprend les étapes consistant à :

entrer (S101) une image d'échantillon dans le modèle d'amélioration d'image, et acquérir (S101) une image de résultat délivrée en sortie par le modèle d'amélioration d'image ;
calculer (S102) des pertes comprenant une perte d'image de l'image de résultat par rapport à une image de réalité de terrain, et une première perte de contrainte de contrainte d'histogramme de luminosité de chacune des branches de convolution d'une image délivrée en sortie à partir de chacune des branches de convolution par rapport à l'image de réalité de terrain ;
ajuster (S103) le module d'amélioration en fonction des pertes ; et
dans un cas où une condition de fin d'entraînement n'est pas satisfaite, renvoyer à l'opération consistant à entrer (S101) l'image d'échantillon dans le modèle d'amélioration d'image.

2. Procédé selon la revendication 1, dans lequel chacune des branches de convolution comprend en outre :

une section d'échantillonnage fournie après la première unité de convolution et comprenant une pluralité d'unités d'échantillonnage configurées pour réaliser un échantillonnage ; et
dans lequel des entrées dans chaque unité d'échantillonnage proviennent d'une branche de convolution où l'unité d'échantillonnage est localisée et d'au moins l'une des autres branches de convolution.

3. Procédé selon la revendication 2, dans lequel les pertes comprennent en outre :
une seconde perte de contrainte de contrainte d'histogramme de luminosité de chacune des branches de convolution d'une image entrée dans la section d'échantillonnage par rapport à l'image entrée dans le module d'amélioration.

4. Procédé selon la revendication 3, dans lequel les pertes sont calculées par les formules suivantes :

$$loss = \left\| I_{out} - I_{GT} \right\|_1 + \lambda_1 Hist\left(FM_{out}, I_{GT}, S\right) + \lambda_2 Hist\left(FM_{in}, I_{in}, S\right) ;$$

$$Hist\left(FM_{out}, I_{GT}, S\right) = \frac{\sum_{j=1}^{S}\left(\left| hist\left(FM_{out}\right)_j - hist\left(I_{GT}\right)_j \right|\right)}{hist\left(I_{GT}\right)} ;$$

$$Hist\left(FM_{in}, I_{in}, S\right) = \frac{\sum_{i=1}^{S}\left(\left| hist\left(FM_{in}\right)_i - hist\left(I_{in}\right)_i \right|\right)}{hist\left(I_{in}\right)} ;$$

où $Hist(FM_{in}, I_{GT}, S)$ représente la première perte de contrainte, $Hist(FM_{in}, I_{in}, S)$ représente la seconde perte de contrainte, $I_{in}$ représente l'image entrée dans le module d'amélioration, $I_{out}$ représente l'image de résultat, $I_{GT}$ représente l'image de réalité de terrain, $FM_{in}$ représente l'image entrée dans la section d'échantillonnage, $FM_{out}$ représente l'image délivrée en sortie à partir de chacune des branches de convolution, S représente un nombre des intervalles de luminosité, $\| \|_1$ représente une fonction de norme L1, hist représente une fonction statistique HIST, $\lambda_1$ représente un coefficient prédéfini supérieur à 0, et $\lambda_2$ représente un coefficient prédéfini supérieur à 0.

5. Procédé selon la revendication 2, dans lequel
la section d'échantillonnage comprend une unité de sous-échantillonnage configurée pour réaliser un sous-échantillonnage, et une unité de sur-échantillonnage fournie après l'unité de sous-échantillonnage et configurée pour réaliser un sur-échantillonnage.

**6.** Procédé selon la revendication 5, dans lequel

l'unité de sous-échantillonnage est configurée pour réaliser un sous-échantillonnage résiduel ; et
l'unité de sur-échantillonnage est configurée pour réaliser un sur-échantillonnage résiduel.

**7.** Procédé selon la revendication 2, dans lequel chacune des branches de convolution comprend en outre : une connexion de raccourci entre un terminal d'entrée de la section d'échantillonnage et un terminal de sortie de la section d'échantillonnage, et la connexion de raccourci est configurée pour entrer une image entrée dans la section d'échantillonnage dans le terminal de sortie de la section d'échantillonnage.

**8.** Procédé selon la revendication 1, dans lequel le modèle d'amélioration d'image comprend en outre :

un module d'alignement fourni avant le module d'amélioration, et configuré pour aligner une image à améliorer et une image adjacente qui sont entrées dans le modèle d'amélioration d'image, l'image adjacente étant une image qui correspond à une même scène que l'image à améliorer et est capturée à un instant adjacent par rapport à l'image à améliorer ; et
un module de fusion fourni entre le module d'alignement et le module d'amélioration, et configuré pour fusionner une pluralité d'images alignées délivrées en sortie par le module d'alignement en une image et entrer l'une image dans le module d'amélioration.

**9.** Procédé d'amélioration d'image, comprenant :

l'entrée (S201) d'au moins une image à améliorer dans un modèle d'amélioration d'image obtenu par entraînement avec le procédé pour entraîner un modèle d'amélioration d'image selon l'une quelconque des revendications 1 à 8 ; et
acquérir (S202) d'une image de résultat délivrée en sortie par le modèle d'amélioration d'image.

**10.** Moyen lisible par ordinateur sur lequel est stocké un programme informatique qui, lorsqu'il est exécuté par un processeur, amène le processeur à réaliser le procédé pour entraîner un modèle d'amélioration d'image selon l'une quelconque des revendications 1 à 8.

**11.** Programme informatique comprenant des instructions qui, lorsqu'elles sont exécutées par un processeur, amènent le processeur à réaliser le procédé d'amélioration d'image selon la revendication 9.

a sample image is input to an image enhancement model, and a result image output by the image enhancement model is acquired — S101

losses are calculated — S102

the enhancement module is adjusted according to the losses — S103

whether a training end condition is met — S104

No

Yes

End

FIG. 1

INt

Alignment Module (AM)

$I_{align}$

Fusion Module (FM)

$I_{in}/I_{fusion}$

enhance-ment module (HCM)

$I_{out}$

image enhancement model

FIG. 2

INt-n

INt

INt+n

AM

FIG. 3

INt

INt+n

AM

FIG. 4

FIG. 5

FIG. 6

FIG. 7

FIG. 8

FIG. 9

FIG.10

at least an image to be enhanced is input to an image enhancement model

↓

a result image output by the image enhancement model is acquired

S201

S202

FIG. 11

computer-readable medium

FIG. 12

**REFERENCES CITED IN THE DESCRIPTION**

**Patent documents cited in the description**

- CN 111105376 A